(19)

Europäisches
Patentamt
European
Patent Office
Office européen
des brevets

(11) **EP 1 841 085 A1**

(12) **EUROPEAN PATENT APPLICATION**
published in accordance with Art. 158(3) EPC

(43) Date of publication:
**03.10.2007 Bulletin 2007/40**

(21) Application number: **05844813.5**

(22) Date of filing: **28.12.2005**

(51) Int Cl.:
*H04B 1/713* (2006.01)     *H04J 11/00* (2006.01)
*H04J 13/00* (2006.01)

(86) International application number:
**PCT/JP2005/024044**

(87) International publication number:
**WO 2006/077733 (27.07.2006 Gazette 2006/30)**

(84) Designated Contracting States:
**DE FR GB**

(30) Priority: **21.01.2005 JP 2005014608**

(71) Applicant: **Sony Corporation
Tokyo 141-0001 (JP)**

(72) Inventor: **IIDA, Sachio,
Sony Corporation
Tokyo 1410001 (JP)**

(74) Representative: **Körber, Martin Hans
Mitscherlich & Partner,
Patent- und Rechtsanwälte,
Postfach 33 06 09
80066 München (DE)**

(54) **WIRELESS COMMUNICATION APPARATUS**

(57)     The present invention eliminates a DC offset problem due to self-mixing in performing frequency conversion on a multiband OFDM_UWB signal by a direct conversion scheme.

Capacitors #1, #2, and #3 are provided for each of the hopping bands #1, #2, and #3. Capacitors are switched in synchronization with frequency hopping. For example, capacitor #1 stores electric charge just before frequency hopping from band #1 to another band #2, and continues a step response after hopping to band #1 again. Soon, the charging/discharging of capacitor #1 ceases and reaches a steady state.

# F I G . 5

EP 1 841 085 A1

**Description**

TECHNICAL FIELD

The present invention relates to a wireless communication apparatus for carrying out reception processing by performing frequency conversion on a wireless signal that hops among frequencies. In particular, the invention relates to a wireless communication apparatus for carrying out reception processing by performing frequency conversion on a multiband OFDM signal of which center frequency hops at predetermined band intervals.

More specifically, the invention relates to a wireless communication apparatus for carrying out reception processing by performing frequency conversion on a multiband OFDM_UWB signal that switches frequencies over a wide band. In particular, the invention relates to a wireless communication apparatus for resolving a self-mixing problem in performing frequency conversion on a received signal by direct conversion in a multiband OFDM_UWB communication scheme.

BACKGROUND ART

Canonical standards concerning wireless networks include IEEE (The Institute of Electrical and Electronics Engineers) 802.11, HiperLAN/2, and IEEE802.15.3.

Further, in recent years, attention is focused on the "ultra-wideband (UWB) communication" as a wireless communication system capable of short-distance, ultrafast transmission. The system performs wireless communication by carrying information on ultrashort pulse waves less than one nanosecond over a very wide frequency band without using carriers. It is expected to put the system into practical use. At present, in IEEE802.15.3 and the like, a data transmission scheme having a packet structure including a preamble is being developed as an access control scheme for ultra-wideband communication.

It is anticipated that WPAN (Wireless Personal Access Network) represented by the UWB as short-distance communication will be employed in various kinds of household electrical appliances and CE (Consumer Electronics) devices in the feature, and home networks and P-to-P transmission exceeding 100 Mbps between CE devices are expected to be achieved. If the use of millimeter wave bands becomes widespread, it becomes possible to achieve short-distance wireless communication exceeding 1 Gbps and also an ultra-high-speed DAN (Device Area Network) for short-distance communication including a storage device etc.

A wireless network constructed in a room forms a multipath environment in which a receiver receives a combination of a direct wave and a plurality of reflected/delayed waves. Multipath generates a delay distortion (or frequency-selective fading) to cause a communication error. Further, a delay distortion causes intersymbol interference.

A major countermeasure against delay distortion can be a multicarrier transmission scheme. According to the multicarrier transmission scheme, transmission data is transmitted by dividing it into a plurality of carriers having different frequencies. Each carrier uses a narrow band and is hardly subject to frequency-selective fading.

For example, the OFDM (Orthogonal Frequency Division Multiplexing) scheme, which is a typical multicarrier transmission scheme, configures a frequency of each carrier so that the carriers become orthogonal to each other in a symbol period. During information transmission, the scheme converts serially transmitted information into parallel information at every symbol cycle lower than the information transmission rate. The scheme allocates a plurality of pieces of output data to carriers, modulates the amplitude and the phase for each carrier, transforms the carriers into signals along the time domain while maintaining the orthogonality of each carrier along the frequency domain by performing an inverse FFT on the multiple carriers, and transmits the transformed signals. The reception occurs in the reverse order of the transmission. The scheme performs an FFT to transform signals along the time domain into those along the frequency domain and demodulates the carriers in accordance with the modulation of each carrier. The scheme performs parallel-serial conversion to reproduce the information originally transmitted in serial form.

The OFDM modulation scheme is adopted as a wireless LAN standard in the IEEE802.11a/g, for example. The IEEE802.15.3 standardization is also in progress for the UWB communication scheme using the OFDM modulation scheme in addition to the DS-UWB scheme and the impulse-UWB scheme. The DS-UWB scheme increases spread speeds of DS information signals to the utmost limit. The impulse-UWB scheme uses impulse signal sequences having very short periods of several hundred picoseconds to configure information signals for transmission and reception. For example, investigation is being made on multiband OFDM_UWB modulation that performs frequency hopping (FH) for a frequency band of 3.1 through 4.8 GHz into a plurality of 528-MHz-wide subbands and uses I FFT/ FFT having 128-point frequency bands (e.g., see non-patent document 2).

Direct spread (DS) and frequency hopping (FH) are a spread spectrum scheme that performs multiple access by assigning a different spread code to each communication channel and uses a very wide communication bandwidth with respect to information signals. The scheme performs primary modulation such as OFDM and secondary modulation with the spread.

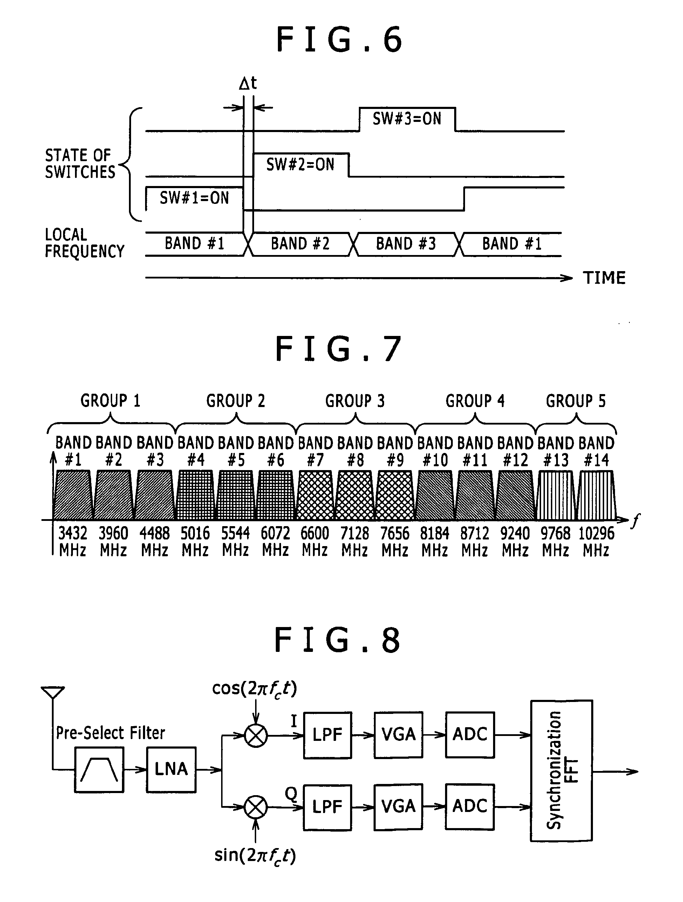

FIG. 7 shows frequency allocation stipulated in the multiband OFDM UWB communication scheme. As shown in FIG. 7, there are group 1 composed of bands #1 to #3 having center frequencies of 3432 MHz, 3960 MHz and 4488 MHz respectively, group 2 composed of bands #4 to #6 having center frequencies of 5016 MHz, 5548 MHz and 6072 MHz respectively, group 3 composed of bands #7 to #9 having center frequencies of 6600 MHz, 7128 MHz and 7656 MHz respectively, group 4 composed of bands #10 to #12 having center frequencies of 8184 MHz, 8712 MHz and 9240 MHz respectively, and group 5 composed of bands #13 and #14 having center frequencies of 9768 MHz and 10296 MHz respectively. It is mandatory to employ the three bands of group #1 out of these groups. The other groups and bands are reserved for future expansion.

FIG. 8 exemplifies a block diagram of a receiver used in a multiband OFDM system (e.g., see non-patent document 6). The receiver shown in FIG. 8 employs a direct conversion scheme for frequency conversion of a received signal. The direct conversion scheme which does not have an intermediate-frequency (IF) stage, amplifies a signal received by an antenna and multiplies the amplified signal by a local frequency so as to perform direct frequency conversion on a baseband signal. The direct conversion scheme facilitates a wider band of a receiver and thereby increases the structural flexibility of the receiver.

In the example of FIG. 8, local (LO) signals $\cos(2\pi f_c)$ and $\sin(2\pi f_c)$ of the same frequency as the center frequency of an RF signal are used for frequency conversion of the received signals of the I-axis and the Q-axis. After the frequency conversion, the low frequencies are extracted by low pass filters (LPF) and amplified by variable gain amplifiers (VGA). The amplified signals are converted from analog to digital form. Further, the time-domain signals are transformed into the f requency-domain signals by FFT, and the carriers are demodulated for the reproduction of information originally transmitted in serial form.

The direct-conversion receiver as shown in FIG. 8 requires three local frequencies of 3432 MHz, 3960 MHz and 4488 MHz which are the same frequencies as the center frequencies of RF signals, for example in the case of using the bands of group 1 shown in FIG. 7.

The adoption of the direct conversion scheme facilitates a wider band of a receiver due to no use of an IF filter and thereby increases the structural flexibility of the receiver. However, in the direct conversion scheme, since a received frequency and a local frequency are identical, there has been a problem that a direct-current component, i.e., a DC offset occurs due to a local signal' s self mixing (LO self mixing) (e.g., see non-patent document 3).

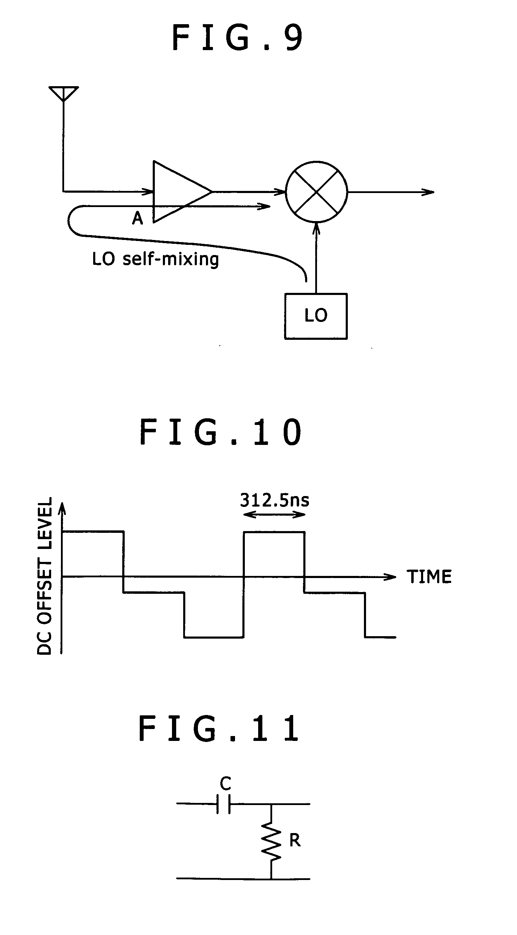

As shown in FIG. 9, LO self-mixing occurs when part of the local signal leaks toward the antenna from the receiver proper, reflects on the antenna, returns to the receiver, and is multiplied by the local signal itself at a mixer. Alternatively, there are cases where after part of the local signal is emitted outside through the antenna, the reflected wave is received by the antenna and mixed with the local signal.

For example, assuming that the amplitude of a local signal in FIG. 9 is 0.5 V, the total gain of the low noise amplifier (LNA) and the mixer is 30 dB, and the leakage of a local signal reflects on the antenna and returns to point A in FIG. 9 with an attenuation of -70 dB, the DC offset of the output of the mixer is 2.5 mV. On the other hand, since the signal level of a desired wave is a minimum of about -74 dBm, the output of the mixer is -44 dBm = 1.4 mVrms. As described, the DC offset is greater than the signal level of a desired wave.

The process of occurrence of a DC offset is expressed by the following equation. In the equation, $\cos(\omega t)$ denotes a local signal, and $\alpha$ and $\phi$ denote the amplitude and phase of a reflected wave that returns to the mixer, respectively. The first term on the right-hand side of the equation indicates a DC offset, and the second and third terms indicate double-frequency components. It is understood that the DC offset varies with the amplitude and phase of the reflected wave.

$$\alpha \cdot \cos(\omega \cdot t + \phi) \cdot \cos(\omega \cdot t) = \frac{1}{2} \cdot \alpha \cdot (\cos(\phi) + \cos(\phi) \cdot \cos(2 \cdot \omega \cdot t) - \sin(\phi) \cdot \sin(2 \cdot \omega \cdot t))$$

(1)

Since frequency hopping (FH) is performed in a multiband OFDM communication system as described above, the frequency of a local signal changes with every frequency hopping. The reflection coefficient of the antenna also varies with a frequency; therefore, the DC offset caused by self-mixing also changes with frequency hopping. Since frequency hopping occurs at the same frequency of 3.2 MHz as an OFDM symbol rate, the DC offset changes stepwise in a cycle of 1/3.2MHz=312.5ns, as shown in FIG. 10.

The elimination of the DC offset is performed generally by using a method for inserting a capacitor in series with the output of the mixer that multiplies a received signal by a local frequency. Inthiscase, as shown in FIG. 11, capacitor C and circuit impedance R constitute a primary high-pass filter (HPF). The cutoff frequency of a frequency response is $1/(2\pi CR)$, and the convergence time of a step response is $2\pi CR$.

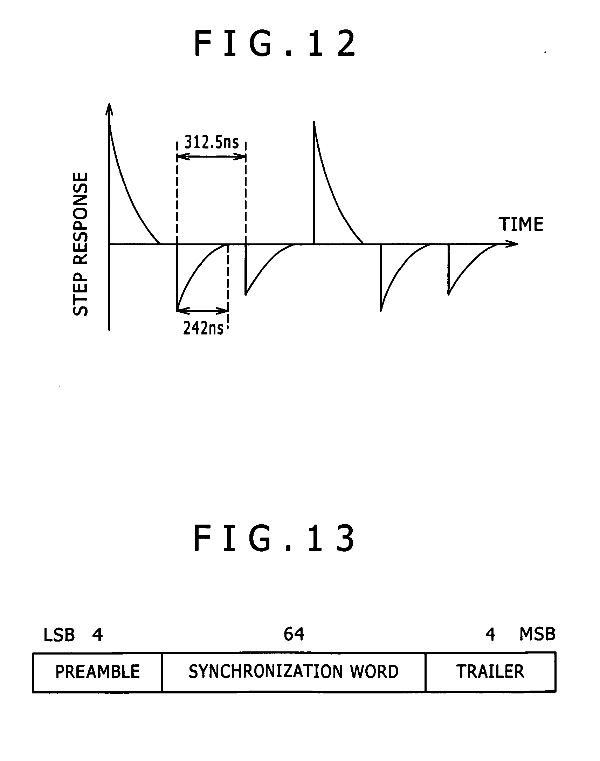

Since the subcarrier frequency of the multiband OFDM system is 4 . 125 MHz, it is desirable that the direct-conversion receiver passes frequencies down to 4.125 MHz. On the other hand, it is desirable to reduce the convergence time of the step response of a DC offset to about 1/10 of the OFDM symbol rate (about 30 ns). However, if the cutoff frequency is 4.125 MHz, the convergence time of the step response becomes as long as 242 ns (=1/4.125MHz) as shown in FIG. 12. Accordingly, there is a troublesome problem that most-of the OFDM symbol time is consumed for the step response. Lowering the cutoff frequency prolongs the response convergence time. Consequently, the DC offset does not fall to zero within one symbol, thereby affecting the next symbol.

In the case of a time division multiplex wireless system, it is possible to detect and store a DC offset during a period of time other than a time slot assigned to a receiver and perform DC offset elimination by subtracting the stored DC during the time slot assigned to the receiver.

In the case of a frequency divisionmultiplexwireless system, it is possible to detect and store a DC offset during a preamble period of a received frame and perform DC offset elimination by subtracting the stored DC during the other periods.

Conventionally, Bluetooth communication is known as a wireless system for performing frequency hopping. In this case, there is a 72-bit access code before a payload, and the head portion thereof has a 4-bit preamble for detecting a DC offset (see FIG. 13). Therefore, by switching a time constant with an additional circuit for reducing the charge and discharge time of a capacitor, it is possible to eliminate a DC offset by using the relatively short preamble time.

On the other hand, in the multiband OFDM communication system, frequency hopping is performed at each symbol and a frequency switching time is only less than 10 ns; therefore, it is necessary that it is within such a short switching time that a DC offset is detected and eliminated. However, it is extremely difficult to detect and eliminate a DC offset within such a short switching time. That is, the problem of a DC offset in performing frequency conversion on a received signal by direct conversion is particularly remarkable in performing frequency hopping in the multiband OFDM system.

[Non-patent document 1] NIKKEI ELECTRONICS Mar. 11, 2002, pp. 55-66 "Ultra Wideband: Revolutionary Wireless Technology is Born"

[Non-patent document 2] IEEE802.15.3a TI Document <URL: http://grouper.ieee.org/groups/802/15/pub/2003/May03 filename: 03142r2P802-15_TI-CFP-Document.doc>

[Non-patent document 3] Anuj Batra, "03267rIP802-15_TG3a-Multi-band-OFDM-CFP-Presentataion.ppt", pp. 17, July 2003.

[Non-patent document 4] Asad A. Abidi, "Direct-Conversion Radio Transceivers for Digital Communications" (IEEE J. Solid-State Circuits, vol. 30, no. 12, pp. 1399-1410, 1995)

DISCLOSURE OF THE INVENTION

It is an object of the present invention to provide an excellent wireless communication apparatus that can suitably carry out reception processing by performing frequency conversion on a multiband OFDM signal of which center frequency hops at predetermined band intervals.

It is another object of the invention to provide an excellent wireless communication apparatus that can suitably carry out reception processing by performing frequency conversion on a multiband OFDM_UWB signal that switches frequencies over a wide band.

It is another object of the invention to provide an excellent wireless communication apparatus that can resolve a DC offset problem due to self-mixing in performing frequency conversion on a received signal by a direct conversion scheme in a multiband OFDM_UWB communication scheme.

The present invention has been made in view of the foregoing and provides a wireless communication apparatus for receiving a communication signal that frequency-hops among a plurality of frequency bands. The wireless communication apparatus includes a frequency conversion unit for multiplying a received communication signal by a local signal composed of a hopping frequency so as to perform frequency conversion, a high-pass filter unit that includes parallel-arranged capacitors corresponding to frequency-hopping bands and switches connections of capacitors in synchronization with frequency hopping and eliminates a DC offset contained in a received signal after frequency conversion, and a reception processing unit for performing reception processing such as low pass, amplification, digital conversion, and demodulation on a received signal after DC offset elimination.

The invention relates to a wireless communication apparatus for carrying out reception processing by performing frequency conversion on a received signal in a multiband OFDM_UWB communication system that switches frequencies over a wide band, and particularly for performing frequency conversion on a received signal by a direct conversion scheme.

The direct conversion scheme facilitates a wider band of a receiver due to no use of an IF filter and thereby increases the structural flexibility of the receiver. However, since a received frequency and a local frequency are identical, there is a problem that a direct-current component, i.e., a DC offset occurs due to a local signal's self mixing. Particularly in the multiband OFDM communication system, frequency hopping is performed at each symbol, and it is difficult to detect and eliminate a DC offset within an extremely short frequency switching time.

The elimination of a DC offset is performed generally by using a method for inserting a primary high-pass filter with the output of the mixer that multiplies a received signal by a local frequency. However, when a step voltage is applied, a capacitor is charged and discharged at every frequency hopping, thus producing a troublesome step response.

A wireless communication apparatus according to the invention has a primary high-pass filter that is composed of parallel-arranged capacitors corresponding to frequency-hopping bands, and eliminates a DC offset contained in a received signal after frequency conversion, while switching capacitors in synchronization with frequency hopping.

For example, capacitors #1, #2, ... are provided for each of the hopping bands #1, #2, .... Capacitor #1 can store electric charge just before frequency hopping from band #1 to another band #2, and can continue a step response after hopping to band #1 again. After repeated switching operations of the capacitor in accordance with frequency hopping in this manner, the charging/discharging of capacitor #1 ceases and reaches a steady state. That is, the elimination processing of a DC offset is performed independently at each hopping band, thereby preventing the transient phenomenon of a step response that occurs in some frequency band from affecting the next hopped frequency band.

In the past, lowering a cutoff frequency prolongs a response convergence time. Consequently, a DC offset does not fall to zero within one symbol, thereby affecting the next symbol. On the other hand, according to the invention, the cutoff frequency of the high-pass filter can be set to be lower than the subcarrier frequency.

If two or more capacitors are simultaneously connected in parallel at the time of switching the connections of capacitors, electric charge is allocated to each capacitor in accordance with each capacitance. In this case, since a DC offset affects another frequency band, there is a possibility of producing an insufficient effect of shortening step response time. For this reason, it is more preferable that the high-pass filter unit has a time difference at the time of switching the connections of capacitors so as not to simultaneously connect two or more capacitors in parallel in synchronization with frequency hopping.

In the case of performing the alternative connection switching of parallel-arranged capacitors, there may be a configuration in which a switch for connection switching is provided at one end of each parallel-arranged capacitor and the other end is always in common connection. In this case, there is apprehension that the end in common connection has a large amount of parasitic capacitance of the circuit. For this reason, it is more preferable to have a parasitic-capacitance elimination unit for eliminating parasitic capacitance at the time of disconnecting each capacitor.

For example, the parasitic-capacitance elimination unit can be composed of a switch for disconnecting the both ends of a capacitor that is not selected and a switch for grounding one end of the disconnected capacitor.

According to the invention, it is possible to provide an excellent wireless communication apparatus that can suitably carry out reception processing by performing frequency conversion on a multiband OFDM_UWB signal that switches frequencies over a wide band.

Further, according to the invention, it is possible to provide an excellent wireless communication apparatus that can resolve a DC offset problem due to self-mixing in performing frequency conversion on a received signal by a direct conversion scheme in a multiband OFDM_UWB communication scheme.

A wireless communication apparatus according to the invention has a primary high-pass filter that is composed of parallel-arranged capacitors corresponding to frequency-hopping bands and switches the connections of capacitors in synchronization with frequency hopping, thereby eliminating a DC offset contained in a received signal after frequency conversion. Since the elimination processing of a DC offset is performed independently at each hopping band, the cutoff frequency of the high-pass filter can be set to be lower than the subcarrier frequency.

These and other objects, features and advantages of the invention will be apparent from the following more particular description of preferred embodiments of the invention, as illustrated in the accompanying drawings.

BRIEF DESCRIPTION OF THE DRAWINGS

FIG. 1 is an illustration showing a high-pass filter composed of parallel-arranged capacitors in accordance with frequency-hopping bands.
FIG. 2 is an illustration showing the relationship between the input voltage and the output voltage of band #1.
FIG. 3 is an illustration showing a modification of the circuit configuration shown in FIG. 1.
FIG. 4 is an illustration exemplifying the circuit configuration in which a parasitic-capacitance elimination unit is added to the circuit shown in FIG. 1.
FIG. 5 is a block diagram of a multiband OFDM_UWB receiver according to an embodiment of the invention.
FIG. 6 is a timing chart exemplifying frequency hopping at the multiband local oscillator by the frequency hopping controller and the switching operations of capacitors #C1 through C#3.

FIG. 7 is an illustration exemplifying frequency allocation stipulated in a multiband OFDM_UWB communication scheme.

FIG. 8 is an illustration exemplifying a block diagram of a direct-conversion receiver used in a multiband OFDM system.

FIG. 9 is an illustration for explaining a local signal's self mixing.

FIG. 10 is an illustration for explaining a DC offset caused by self-mixing.

FIG. 11 is an illustration exemplifying the configuration of a primary high-pass filter.

FIG. 12 is an illustration for explaining the convergence time of the step response of a DC offset if a cutoff frequency is 4.125 MHz in a direct-conversion receiver.

FIG. 13 is an illustration showing the structure of an access code in Bluetooth communication.

BEST MODE FOR CARRYING OUT THE INVENTION

Embodiments of the present invention will be described below in detail with reference to the accompanying drawings.

The present invention relates to a wireless communication apparatus for carrying out reception processing by performing frequency conversion on a received signal in a multiband OFDM_UWB communication system that switches frequencies over a wide band, and particularly for performing frequency conversion on a received signal by a direct conversion scheme.

The adoption of the direct conversion scheme facilitates a wider band of a receiver due to no use of an IF filter and thereby increases the structural flexibility of the receiver. However, since a received frequency and a local frequency are identical, there is a problem that a direct-current component, i.e., a DC offset occurs due to a local signal's self mixing. Particularly in the multiband OFDM communication system, frequency hopping is performed at each symbol, and it is difficult to detect and eliminate a DC offset within an extremely short frequency switching time.

The elimination of a DC offset is performed generally by using a method for inserting a primary high-pass filter (HPF) with the output of the mixer that multiplies a received signal by a local frequency as shown in FIG. 11. However, when a step voltage is applied as shown in FIG. 10, the capacitor is charged and discharged at every frequency hopping, thus producing a step response as shown in FIG. 12.

The present inventors consider that if a capacitor can store electric charge just before frequency hopping from a band #1 to another band #2 and can continue a step response after hopping to the band #1 again, the charging/discharging of the capacitor ceases and reaches a steady state. That is, the elimination processing of a DC offset is performed independently at each hopping band.

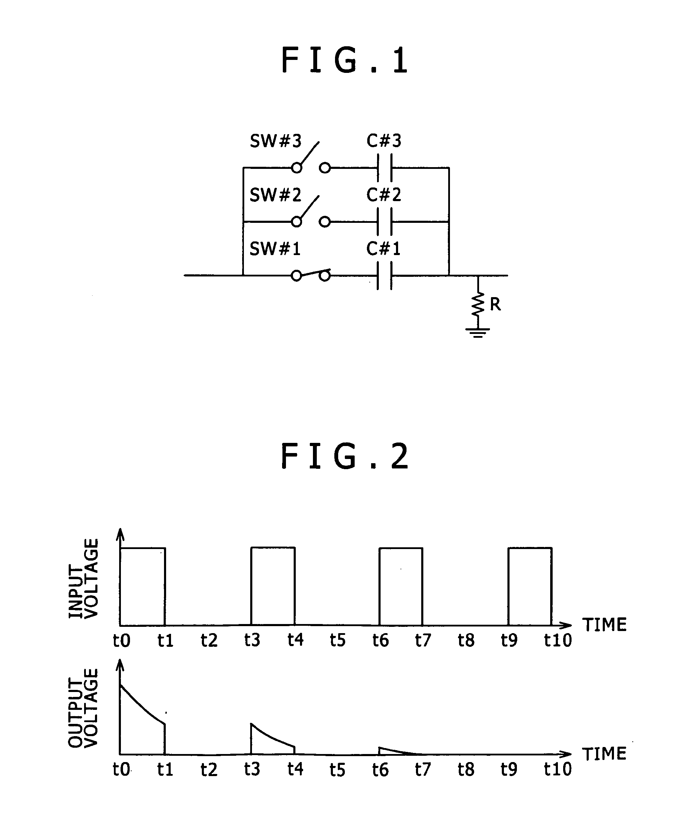

In order to achieve such processing, a primary high-pass filter insertedafter a frequency conversion unit thatmultiplies a received signal by a local signal is composed of parallel-arranged capacitors corresponding to frequency-hopping bands as shown in FIG. 1, thereby switching capacitors in synchronization with frequency hopping. In the example of FIG. 1, capacitors #1, #2, and #3 are provided for each of the hopping bands #1, #2, and #3.

Each individual capacitor is charged and discharged repeatedly at every frequency hopping, thus producing each step response. At the time of the switching operations of capacitors in synchronization with frequency hopping, capacitor #1 can store electric charge just before frequency hopping from band #1 to another band #2, and can continue a step response after hopping to band #1 again. After repeated switching operations of the capacitor in accordance with frequency hopping, the charging/discharging of capacitor #1 ceases and reaches a steady state. That is, the elimination processing of a DC offset is performed independently at each hopping band, thereby preventing the transient phenomenon of a step response that occurs in some frequency band from affecting the next hopped frequency band.

As shown FIG. 7, bands #1 to #3 constitute group 1 which is mandatory in the multiband OFDM UWB communication scheme. That is, frequency hopping is performed among band #1, band #2, and band #3. Accordingly, the high-pass filter shown in FIG. 1 is switched among the following three states.

(1) At the time of band #1, SW #1 is turned on and SW #2 and SW #3 are turned off so as to establish the connection of capacitor #1 only.

(2) At the time of band #2, SW #2 is turned on and SW #1 and SW #3 are turned off so as to establish the connection of capacitor #2 only.

(3) At the time of band #3, SW #3 is turned on and SW #1 and SW #2 are turned off so as to establish the connection of capacitor #3 only.

FIG. 2 shows the relationship between the input voltage and the output voltage of band #1. The horizontal axis indicates time with respect to the frequency hopping period. Capacitor #1 is discharged beforehand, and SW #1 is turned on for the first time at frequency hopping period t0.

At the moment of turning SW #1 on, an input voltage is directly applied to circuit impedance R as if capacitor C#1 were shorted. Instantly, negative charge flows into the right electrode of capacitor C#1 through circuit impedance R. As a result, positive charge in line with the input voltage accumulates on the left electrode of capacitor C#1, thus charging capacitor C#1 and decreasing the output voltage.

SW #1 is turned off at the next frequency hopping period t1. Therefore, charging is discontinued, and the electric charge on capacitor C#1 cannot move and is stored.

SW #1 is turned on again in accordance with hopping to band #1 at hopping period t3. Accordingly, charging restarts with an output voltage that is lower than the initial output voltage by the charged potential of capacitor C#1, and the output voltage further decreases.

The charging operation is discontinued at the next hopping period t4. Then, charging restarts at t6 when hopping to band #1 is performed. At the next hopping period t7, the charging of capacitor C#1 is completed so that the output voltage reaches a steady state of zero and does not change afterward.

As described, transient phenomena continue and discontinue repeatedly. Therefore, even if the cutoff frequency of the high-pass filter is set to be lower than the subcarrier frequency, the step response converges on a steady state after several frequency hopping periods have elapsed. This prevents the occurrence of the problem of a step response at every frequency hopping (described above).

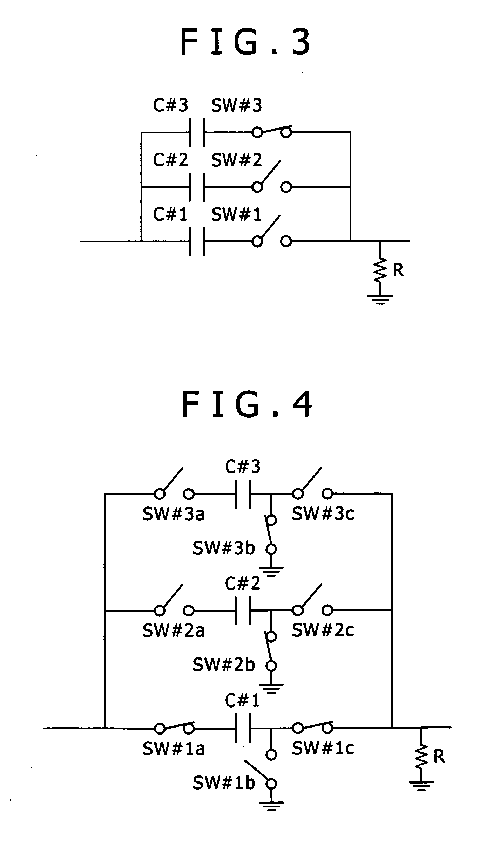

Further, it is possible to reverse the positional relationship between the parallel-arranged capacitors and the switches for switching the respective connections in the configuration of the high-pass filter shown in FIG. 1. FIG. 3 exemplifies the circuit configuration in this case.

In either case of the circuit configurations shown in FIGS. 1 and 3, a switch for connection switching is provided at one end of each parallel-arranged capacitor, and the other end is always in common connection. In such a case, there is apprehension that the end in common connection has a large amount of parasitic capacitance of the circuit. For this reason, it is more preferable to have a parasitic-capacitance elimination unit for eliminating parasitic capacitance at the time of disconnecting each capacitor.

For example, the parasitic-capacitance elimination unit can be composed of a switch for disconnecting the both ends of a capacitor that is not selected and a switch for grounding one end of the disconnected capacitor.

FIG. 4 exemplifies the circuit configuration of a high-pass filter to which the parasitic-capacitance elimination unit is added. In the example of FIG. 4, capacitor C#1 is in a connected state in which SW #1a and SW #1c are ON at the same time and SW #1b is OFF. At the time of disconnecting capacitor C#1, SW #1a and SW #1c are turned off at the same time and SW #1b is turned on. Thus, in either case of the capacitors C#1 to C#3, switches with the suffixes "a" and "c" and a switch with the suffix "b" operate exclusively.

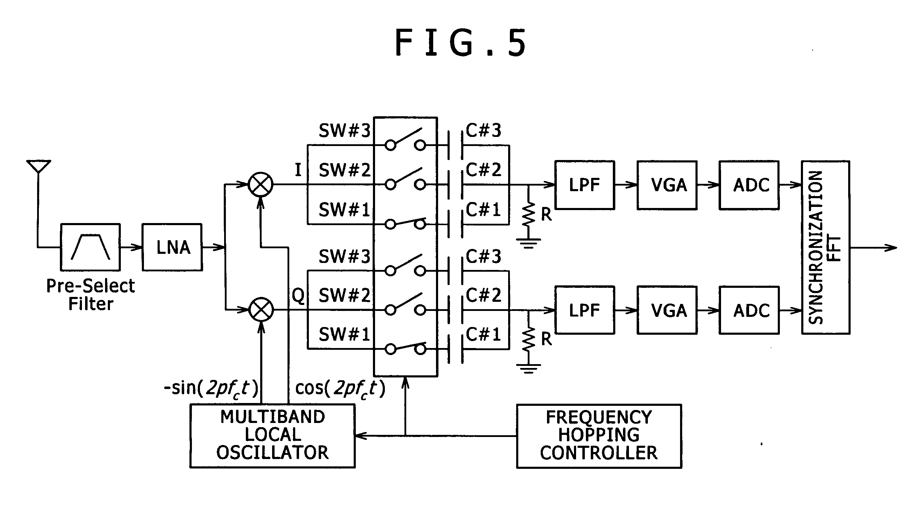

FIG. 5 shows a block diagram of a multiband OFDM_UWB receiver according to an embodiment of the invention. In the receiver shown in FIG. 5, the circuit with the mechanism for switching capacitors shown in FIG. 1 is adopted as a high-pass filter after frequency downconversion. The receiver shown in FIG. 5 employs the direct conversion scheme for frequency conversion of received signals.

Local (LO) signals $\cos(2\pi f_c)$ and $\sin(2\pi f_c)$ of the same frequency as the center frequency of an RF signal are used for frequency conversion of the received signals of the I-axis and the Q-axis. For example, in the case of using the bands of group 1 shown in FIG. 7, the multiband receiver requires three local frequencies of 3432 MHz, 3960 MHz and 4488 MHz which are the same frequencies as the center frequencies of RF signals.

A multiband local oscillator generates these multiple frequency signals. Since a channel switching width is large in the multiband OFDM_UWB system, a single PLL cannot perform wideband frequency switching. Therefore, it is considered that the multiband local oscillator is preferably constructed so as to accurately obtain the center frequency of each band in the multiband system by using frequency division and frequency calculation based on a single reference frequency. Such a frequency synthesizer is disclosed, for example, in the specification of Japanese Patent Application JP 2004-251006 which is already assigned to the present,applicant.

A frequency hopping controller controls frequency hopping operation in the multiband local oscillator. Further, a downconversion mixer multiplies the received signals of the I-axis and the Q-axis by the local signals outputted from the multiband local oscillator respectively so as to perform frequency conversion.

In the downconversion by the direct conversion scheme, a DC offset occurs due to a local signal's self mixing. In this embodiment, the subsequent stage of the downconversion mixer includes the respective primary high-pass filters on the I-axis and the Q-axis that are composed of parallel-arranged capacitors C#1 to C#3 corresponding to frequency-hopping bands #1 to #3 and SW #1 to SW #3 for switching the connections of the capacitors.

The frequency hopping controller performs the switching operations of SW #1 through SW3 in synchronization with frequency hopping, i.e., the switching operations of local frequencies at the multiband local oscillator, thus performing the alternate connections of capacitors C#1 through C#3 in synchronization with frequency hopping.

Capacitor #1 can store electric charge just before frequency hopping from band #1 to another band #2, and can continue a step response after hopping to band #1 again. After repeated switching operations of the capacitor in accordance with frequency hopping in this manner, the charging/discharging of capacitor #1 ceases and reaches a steady state. The same applies to the other capacitors C#2 and C#3. That is, the elimination processing of a DC offset is performed independently at each hopping band, thereby preventing the transient phenomenon of a step response that occurs in some frequency band from affecting the next hopped frequency band.

Further, capacitors C#1 to C#3 may be provided with parasitic-capacitance elimination units as shown in FIG. 4 which are omitted in FIG. 5.

In the received signals that have been frequency-converted and subjected to the DC offset elimination in this manner, the low frequencies are extracted by low pass filters and amplified by variable gain amplifiers. The amplified signals are converted from analog to digital form. Further, the time-domain signals are transformed into the frequency-domain signals by FFT, and each carrier is demodulated for the reproduction of information originally transmitted in serial form.

If two or more capacitors are simultaneously connected in parallel at the time of switching the connections of capacitors C#1 through C#3, electric charge is allocated to each capacitor in accordance with each capacitance. In this case, since a DC offset affects another frequency band, there is a possibility of producing an insufficient effect of shortening step response time. For this reason, the frequency hopping controller has a time difference $\Delta t$ at the time of switching the connections of capacitors so as not to simultaneously connect two or more capacitors inparallel in synchronization with frequency hopping at the multiband local oscillator. FIG. 6 exemplifies frequency hopping at the multiband local oscillator by the frequency hopping controller and the switching operations of capacitors C#1 through C#3.

The invention has been described in detail with reference to the specific embodiments. However, it is obvious that those skilled in the art can make modifications and /or substitutions of the embodiments without departing from the scope and sprit of the invention. That is, the embodiments have been described for illustrative purpose only, and the contents of the specification should not be interpreted restrictively. To understand the scope of the invention, the appended claims should be taken into consideration.

## Claims

1. A wireless communication apparatus for receiving a communication signal that frequency-hops among a plurality of frequency bands, the wireless communication apparatus comprising:

    a frequency conversion unit for multiplying a received communication signal by a local signal composed of a hopping frequency so as to perform frequency conversion;
    a high-pass filter unit that includes parallel-arranged capacitors corresponding to frequency-hopping bands and switches connections of capacitors in synchronization with frequency hopping; and
    a reception processing unit for performing reception processing on a received signal that has passed through the high-pass filter unit

2. The wireless communication apparatus according to claim 1, wherein the communication signal is an ultra-wideband signal obtained by carrying transmission information over a wide frequency band.

3. The wireless communication apparatus according to claim 1, wherein the communication signal is an OFDM signal obtained by allocating a plurality of pieces of data to carriers, modulating amplitude and phase for each carrier, and transforming carriers into signals along a time domain while maintaining orthogonality of each carrier along a frequency domain, and
    wherein the reception processing unit performs OFDM demodulation.

4. The wireless communication apparatus according to claim 1, wherein the high-pass filter unit has a time difference at the time of switching connections of capacitors so as not to simultaneously connect two or more capacitors in parallel in synchronization with frequency hopping.

5. The wireless communication apparatus according to claim 1, wherein the high-pass filter unit has a parasitic-capacitance elimination unit for eliminating parasitic capacitance at the time of disconnecting each capacitor.

# FIG.1

SW#3    C#3

SW#2    C#2

SW#1    C#1

R

# FIG.2

INPUT VOLTAGE

t0  t1  t2  t3  t4  t5  t6  t7  t8  t9  t10    TIME

OUTPUT VOLTAGE

t0  t1  t2  t3  t4  t5  t6  t7  t8  t9  t10    TIME

# FIG.3

# FIG.4

# FIG.5

EP 1 841 085 A1

# FIG.6

STATE OF SWITCHES

Δt

SW#3=ON

SW#2=ON

SW#1=ON

LOCAL FREQUENCY

| BAND #1 | BAND #2 | BAND #3 | BAND #1 |

TIME

# FIG.7

| GROUP 1 | GROUP 2 | GROUP 3 | GROUP 4 | GROUP 5 |

| BAND #1 | BAND #2 | BAND #3 | BAND #4 | BAND #5 | BAND #6 | BAND #7 | BAND #8 | BAND #9 | BAND #10 | BAND #11 | BAND #12 | BAND #13 | BAND #14 |

$f$

| 3432 MHz | 3960 MHz | 4488 MHz | 5016 MHz | 5544 MHz | 6072 MHz | 6600 MHz | 7128 MHz | 7656 MHz | 8184 MHz | 8712 MHz | 9240 MHz | 9768 MHz | 10296 MHz |

# FIG.8

$\cos(2\pi f_c t)$

Pre-Select Filter

LNA

I → LPF → VGA → ADC →

Q → LPF → VGA → ADC →

Synchronization FFT

$\sin(2\pi f_c t)$

# F I G . 9

A

LO self-mixing

LO

# F I G . 1 0

312.5ns

DC OFFSET LEVEL

TIME

# F I G . 1 1

C

R

# FIG.12

# FIG.13

| LSB 4 | 64 | 4 MSB |
|---|---|---|
| PREAMBLE | SYNCHRONIZATION WORD | TRAILER |

## INTERNATIONAL SEARCH REPORT

| International application No. |
|---|
| PCT/JP2005/024044 |

A. CLASSIFICATION OF SUBJECT MATTER
**H04B1/713**(2006.01), **H04J11/00**(2006.01), **H04J13/00**(2006.01)

According to International Patent Classification (IPC) or to both national classification and IPC

B. FIELDS SEARCHED

Minimum documentation searched (classification system followed by classification symbols)
H04B1/713, H04J11/00, H04J13/00

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
IEEEXplore

C. DOCUMENTS CONSIDERED TO BE RELEVANT

| Category* | Citation of document, with indication, where appropriate, of the relevant passages | Relevant to claim No. |
|---|---|---|
| A | JP 62-180603 A (NEC Corp.), 07 August, 1987 (07.08.87), Figs. 1 to 3 & US 4745594 A   & CA 1266335 A | 1-5 |
| A | JP 2003-229780 A (Fujitsu Ltd.), 15 August, 2003 (15.08.03), Figs. 4, 8, 9 & US 2003/0148749 A1   & US 6968172 B2 | 1-5 |
| T | Tuan-Anh PHAN et al., A High Performance CMOS Direct Down Conversion Mixer for UWB System, IEICE Transactions ELECTRON, Vol.E88-C No.12, 2005.12, pages 2316 to 2321 | 1-5 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 February, 2006 (21.02.06) | 07 March, 2006 (07.03.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2005/024044

C (Continuation).   DOCUMENTS CONSIDERED TO BE RELEVANT

| Category* | Citation of document, with indication, where appropriate, of the relevant passages | Relevant to claim No. |
|---|---|---|
| A | Young Hwan You et al., Performance of simple timing synchronization and DC compensation schemes for a short-ranged Bluetooth Network, Personal Indoor and Mobile Radio Communications 2000 IEEE International Symposium on, Vol.2, 2000.09, pages 1320 to 1324 | 1-5 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004251006 A

### Non-patent literature cited in the description

- Ultra Wideband: Revolutionary Wireless Technology is Born. *NIKKEI ELECTRONICS,* 11 March 2002, 55-66
- *IEEE802.15.3a TI Document, http://grouper.ieee.org/groups/802/15/pub/2003/May 03 filename: 03142r2P802-15_TI-CFP-Document.doc*
- **ANUJ BATRA.** *IEEE802.15.3a TI Document,* July 2003, 17, 03267rIP802-15_TG3a-Multi-band-OFDM-CFP-Presentataion.ppt
- **ASAD A. ABIDI.** Direct-Conversion Radio Transceivers for Digital Communications. *IEEE J. Solid-State Circuits,* 1995, vol. 30 (12), 1399-1410